# EUROPÄISCHE PATENTSCHRIFT

(11) **EP 1 429 134 B1**
(45) Veröffentlichungstag und Bekanntmachung des Hinweises auf die Patenterteilung: **16.11.2005**
(21) Anmeldenummer: 03025244.9
(22) Anmeldetag: 05.11.2003
(51) Int. Cl.: G01M 17/02, G01M 1/00, G01B 7/16

(54) **Verfahren und Vorrichtung zum Prüfen der Gleichförmigkeit eines Luftreifens**
Method and device for testing the uniformity of a tyre
Procede et dispositif pour tester l'uniformité des pneus

(30) Priorität: 11.12.2002 DE 10257907
(43) Veröffentlichungstag der Anmeldung: 16.06.2004
(73) Patentinhaber: Snap-on Equipment GmbH, 64319 Pfungstadt (DE)
(72) Erfinder: Rothamel, Karl, 64372 Ober-Ramstadt (DE)
(74) Vertreter: Nöth, Heinz

(56) Entgegenhaltungen:
- WO-A-98/08070
- DE-A- 10 019 387
- PATENT ABSTRACTS OF JAPAN vol. 2000, no. 22, 9. März 2001 (2001-03-09) -& JP 2001 141615 A (TOYO TIRE & RUBBER CO LTD), 25. Mai 2001 (2001-05-25)
- PATENT ABSTRACTS OF JAPAN vol. 014, no. 577 (P-1146), 21. Dezember 1990 (1990-12-21) & JP 02 248809 A (KOBE STEEL LTD), 4. Oktober 1990 (1990-10-04)

## Beschreibung

Die Erfindung betrifft ein Verfahren und eine Vorrichtung zum Prüfen der Gleichförmigkeit eines mit Gasdruck beaufschlagbaren Reifens (Luftreifens) eines Fahrzeugs.

Aus PATENT ABSTRACTS OF JAPAN vol. 2000, no. 22, 9. März 2001 (2001-03-09) & JP 2001 141615 A (Toyo Tire & Rubber Co. Ltd). ist es zur Abschätzung der Hochgeschwindigkeitsgleichförmigkeit eines Reifens beim Reifensortieren bekannt, aus der statischen Reifenunwucht und dem bei niedriger Drehzahl ermittelten Unwuchtvektor durch Vektoraddition dem Unwuchtvektor bei hoher Drehzahl zu bestimmen und in Abhängigkeit davon die Reifensortierung vorzunehmen. Dabei wird vermieden, dass bei hoher Drehzahl die Reifenunwucht bestimmt werden muss.

Aus DE 197 31 486 und EP 0 884 547 ist es bekannt, vor und nach einer Änderung des Reifendrucks mit kohärenter Strahlung jeweils ein Interferogramm der Reifenoberfläche zu erzeugen Die Interferogramme werden visualisiert und aus dem Vergleich der entsprechenden Bilder Informationen über vorhandene Reifendefekte gewonnen. Zur Aufnahme der Interferongramme wird das Rad, dass den zu prüfenden Reifen aufweist, auf einer handelsüblichen Wuchtmaschine (beispielsweise für Kraftfahrzeugräder) montiert. Anschließend wird ein an der Wuchtmaschine angeordneter Prüfkopf zur Aufnahme der Interferogramme an den Reifen bis auf einen vorgegebenen Prüfabstand herangefahren. Die Interferogramme der Reifenoberfläche werden dann segmentweise aufgenommen. Jeweils nach Beenden der Aufnahme eines Prüfsegments wird das Rad durch die Wuchtmaschine um den Betrag des Prüfsegments weitergedreht. Dieser Vorgang wird wiederholt bis der gesamte Reifen überprüft ist.

Die entsprechende Reifenprüfvorrichtung weist eine Wuchtmaschine, eine Drucklufteinrichtung zur Änderung des Reifendrucks, einen Prüfkopf, eine Positionierungseinrichtung für den Prüfkopf, einen Rechner und eine Steuereinrichtung für die Wuchtmaschine auf, um das Rad um den Betrag eines Prüfsegments weiter zu drehen. Während eine handelsübliche Wuchtmaschine (beispielsweise zum Auswuchten von Kraftfahrzeugrädern) zusammen mit einem Rechner und einer Steuereinrichtung zum Einstellen der Winkelgeschwindigkeit der Wuchtmaschine ausgeliefert wird, sind die Luftdruckeinrichtungsänderungen des Reifendrucks, der Prüfkopf und die Positionierungseinrichtung für den Prüfkopf Zusatzausstattungen, die von einer Werkstatt extra angeschafft werden müssten, um ein entsprechendes Reifenprüfverfahren anwenden zu können.

Ferner sind seit langem Reifengleichförmigkeits-Messmaschinen bekannt, mit denen sich das Federverhalten eines unter Last abrollenden Reifens in drei senkrecht zueinander stehenden Achsrichtungen ermitteln lässt. Aus den ermittelten Tangential-, Radial- und Lateralkräften lassen sich ebenfalls defekte oder Strukturfehler des untersuchten Reifens auffinden. Die bekannten Reifengleichförmigkeits-Messmaschinen sind relativ groß und sind wegen des erforderlichen Platzbedarfs in den meisten Werkstätten nicht vorhanden, so dass sie üblicherweise einem Monteur von Kraftfahrzeugrädern nicht zur Verfügung stehen. Dennoch ist es aus Sicherheitsgründen wünschenswert, dass solche Prüfverfahren vor einer Montage eines neuen oder gebrauchten Reifens zur Verfügung stehen, mit denen ein Defekt an dem Reifen rechtzeitig entdeckt bzw. weitgehend ausgeschlossen werden kann.

Aufgabe der Erfindung ist es demgemäss ein Verfahren und eine Vorrichtung zum Prüfen der Gleichförmigkeit eines Luftreifens eines Fahrzeuges zu schaffen, die weniger aufwendig sind und insbesondere geringere Kosten verursachen.

Diese Aufgabe wird erfindungsgemäß durch ein Verfahren der eingangs genannten Art mit den Merkmalen des Anspruchs 1 gelöst. Der Erfindung liegt die Erkenntnis zu Grunde, dass mittels Veränderung bezüglich einer Rotationssachse im Wesentlichen symmetrisch an dem Reifen angreifender 'Kräfte eine durch einen Defekt oder Strukturfehler bedingte Verlagerung der Hauptträgheitsachse des Reifens herbeigeführt wird und diese Verlagerung in einer differenziellen Bestimmung der Unwucht eines den zu prüfenden Reifen aufnehmenden Rades ermittelt wird. Nur bei einem idealen Rad bzw. Reifen fallen die Rotationsachse, die Zentralachse und die Hauptträgheitsachse des Rades zusammen. In jedem vom idealen Rad bzw. Reifen abweichenden Fall liegt eine Unwucht vor. Dies kann zum Beispiel dann der Fall sein, wenn das die Rotationsachse festlegende Zentrierloch eines Scheibenrades der Felge, auf dem der zu prüfende Reifen montiert ist, außerhalb des Zentrums angeordnet ist oder wenn aufgrund einer unregelmäßigen Massenverteilung des Reifens oder des Rades die Hauptträgheitsachse des Rades nicht mit der Zentralachse des Rades zusammenfällt, das heißt gegenüber dieser verschoben oder verkippt ist. Ferner kann natürlich auch ein Zusammenwirken beider Faktoren - also eine Verschiebung und eine Verkippung der Hauptträgheitsachse - zu einer Unwucht des Rades führen. Diese Unwucht des Rades bleibt durch die Veränderung des Luftdruckes unverändert und entfällt bei der Differenzbildung. Bildet bzw. vergrößert sich durch eine Erhöhung der angreifenden Kräfte beispielsweise eine durch einen Defekt oder Strukturschaden oder -schwäche (beispielsweise einen Karkassenbruch) auf der Lauffläche oder an den Flanken des Reifens bedingte Verformung oder verringert sich eine solche bei Verringerung der Kräfte, dann führt dies zu einer Veränderung der Massenverteilung des Reifens bzw. des den Reifen aufweisenden Rades. Eine solche Massenverteilung führt zu einer Verlagerung (Verkippung und/oder Verschiebung) der Hauptträgheitsachse des Rades die mittels mindestens jeweils einer Bestimmung der Unwucht vor und nach der Veränderung der an dem Reifen angreifenden Kräfte festgestellt werden kann.

In dem Prüfverfahrens wird die Veränderung der an dem Reifen angreifenden Kräfte durch eine Veränderung des Fülldrucks des Reifens herbeigeführt. Druckkräfte greifen gleichmäßig an der gesamten Oberfläche der Reifeninnenseite an. Dementsprechend greifen Druckkräfte symmetrisch bezüglich der Zentralachse des Reifens an.

Vorteilhaft ist es, wenn das Verfahren dieser bevorzugten Ausführungsform nach den folgenden Schritten erfolgt: Erstes Messen der infolge der Unwucht des Rades wirkenden Kräfte, wobei der Reifen mit einem ersten Innendruck P₁ beaufschlagt ist, Ermitteln der Unwucht aus den drehwinkelbezogen gemessenen Kräften, Speichern der ermittelten Unwucht in Form eines ersten Unwuchtvektors U₁, zweites Messen der infolge der Unwucht des Rades wirkende Kräfte, wobei der Reifen mit einem vom ersten Innendruck P₁ abweichenden, zweiten Innendruck P₂ beaufschlagt ist, Ermitteln der Unwucht aus den erneut mit Drehwinkelbezug gemessenen Kräften, Speichern der erneut ermittelten Unwucht in Form eines zweiten Unwuchtvektors U₂ und Bilden einer Differenz aus den beiden Unwuchtvektoren U₁ und U₂. Es können auch mehr als zwei Unwuchtmessungen mit unterschiedlichen Messbedingungen am Luftreifen, insbesondere bei unterschiedlichen Innendrücken durchgeführt werden.

Bei dem Prüfverfahren kann eine Bestimmung der statischen Unwuchten oder der dynamischen Unwuchten beispielsweise mittels einer handelsüblichen Radauswuchtmaschine durchgeführt werden.

Eine Veränderung der im Wesentlichen symmetrisch an dem Reifen angreifenden Kräfte wird durch eine Veränderung der bei der Unwuchtmessung verwendeten Drehzahl herbeigeführt. Bei einer Veränderung der Drehzahl ändern sich die an dem Reifen angreifenden Fliehkräfte.

Vorteilhaft ist es, das Prüfverfahren nach den folgenden Schritten durchzuführen: Erstes Messen der durch die Unwucht des Rades wirkenden Kräfte bei einer ersten Drehzahl D₁, Ermitteln der Unwucht aus den mit Drehwinkelbezug gemessenen Kräften, Speichern der ermittelten Unwucht in Form eines ersten Unwuchtvektors U₁, zweites Messen der durch die Unwucht des Rades wirkenden Kräfte bei einer von der ersten Drehzahl D₁ abweichenden, zweiten Drehzahl D₂, Ermitteln der Unwucht aus den erneut gemessenen drehwinkelbezogenen Kräften, Speichern der erneut ermittelten Unwucht in Form eines zweiten Unwuchtvektors U₂ und Bilden einer Differenz aus den Unwuchtvektoren U₁ und U₂. Auch bei diesem Verfahren kommt es darauf an, dass wenigstens zwei Messungen bei einer unterschiedlichen Drehzahl durchgeführt werden. Ebenso ist es aber möglich, mehr als zwei Messungen der durch die Unwucht des Rades wirkenden Kräfte durchzuführen, wobei die Drehzahl stufenweise oder kontinuierlich bzw. quasi kontinuierlich während der Messungen erhöht, verringert oder konstant gehalten werden kann.

Auch bei dem Prüfverfahren kann eine Bestimmung der statischen Unwuchten oder der dynamischen Unwuchten beispielsweise mittels einer handelsüblichen Radauswuchtmaschine durchgeführt werden.

Vorteilhaft ist es, den Luftreifen beim ersten Messlauf mit einem höheren Druck als der Nenndruck und beim zweiten Messlauf mit dem Nenndruck zu füllen wird. Dadurch weist der Luftreifen nach der Prüfung, bereits den gewünschten Druck auf und ein weiterer Arbeitsgang des Ablassens der Luft nach der Prüfung kann eingespart werden.

Weiterhin vorteilhaft ist es, die Differenz der beiden Unwuchtvektoren mit einer in Abhängigkeit von den Radabmessungen zulässigen Toleranz zu vergleichen. Durch die Differenzbildung der Unwuchtvektoren aus der ersten und der zweiten Unwuchtmessung kann auf diese Weise in Abhängigkeit vom Radtyp eine Reifenbewertung durchgeführt werden.

Die Aufgabe wird ferner durch eine Vorrichtung gelöst, die eine Radauswuchtmaschine aufweist mit einem Rotationsantrieb für ein den zu prüfenden Luftreifen aufnehmendes Rad, mit einer Antriebssteuerung und mit einem Messwertaufnehmer zum Messen der durch eine Unwucht des Rades während der Rotation wirkenden Kräfte und die ferner eine Auswerteeinrichtung aufweist mit einer ersten Einrichtung zum Ermitteln von Unwuchtvektoren aus den gemessenen Kräften und mit einer zweiten Einrichtung zum Ermitteln der Differenz aus den beiden Unwuchtvektoren. Mit einer Radauswuchtmaschine kann sowohl die statische Unwucht als auch die dynamische Unwucht des Rades in bekannter Weise ermittelt werden. Die Ermittlung der dynamischen Unwuchten gibt Aufschluss, ob eine unsymmetrische Massenverteilung des Rades bzgl. seiner Rotationsachse in zwei senkrecht zur Rotationsachse liegenden Ebenen des Rades vorliegt bzw. in welcher Ebene und in welchem Winkelabschnitt die entsprechende Massenanhäufung oder das Massendefizit sich befindet. Die Lage einer solchen Unwucht oder ggf. einer statischen Unwucht wird bevorzugt auf einer Anzeige dargestellt.

Bevorzugt weist die Prüfvorrichtung ferner eine Druckgasversorgung zum Füllen des Reifens mit einem vorausgewählten Druck auf. Mit Hilfe dieser Druckgasversorgung kann der Reifen entweder manuell oder mittels einer automatischen Steuerung (Steuerelektronik) mit einem bzw. verschiedenen vorausgewählten Drucken beaufschlagt werden.

In einer anderen bevorzugten Ausführungsform sind der Rotationsantrieb und die Antriebssteuerung so ausgestaltet, dass die Drehzahl variiert werden kann. Die Drehzahlvariierung kann ggf. entweder manuell oder mittels einer automatischen Steuerung (Steuerelektronik) durchgeführt werden. Die Drehzahl kann ferner stufenweise zwischen den Messungen oder (quasi-) kontinuierlich während einer (quasi-) kontinuierlichen Messung variiert werden.

Die Auswerteeinrichtung ist vorzugsweise Bestandteil eines digitalen Computersystems. Sie kann ferner die Steuerelektronik zum Auswählen des Reifenfülldrucks und/oder die automatische Steuerung zum Auswählen der Drehzahl während der Unwuchtmessung umfassen.

Die Aufgabe wird ferner gelöst durch eine Computerprogramm, dass zur computergestützten Durchführung der folgenden Verfahrensschritte eingerichtet ist: Einlesen erster Messwerte der durch eine Unwucht eines Rades während der Rotation auf Messwertaufnehmer einer Radauswuchtmaschine wirkenden Kräfte, Ermitteln der Unwucht aus den eingelesenen Messwerten, Speichern der ermittelten Unwucht in Form eines ersten Unwuchtvektors U₁, Einlesen zweiter Messwerte der durch eine Unwucht des Rades während der Rotation auf die Messwertaufnehmer der Radauswuchtmaschine wirkenden Kräfte, Ermitteln der Unwucht aus den erneut eingelesenen Messwerten, Speichern der erneut ermittelten Unwucht in Form eines zweiten Unwuchtvektors U₂ und Bilden einer Differenz aus den beiden Unwuchtvektoren U₁ und U₂.

Ein bevorzugtes Computerprogramm ist ferner zur Durchführung der Verfahrensschritte Ausgabe eines Steuersignals zum Einstellen einer Drehzahl an einem Rotationsantrieb der Radauswuchtmaschine und/oder Ausgabe eines Steuersignals zum Einstellen des Reifendrucks an einer Druckluftversorgung eingerichtet.

Weitere Merkmale und Vorteile der vorliegenden Erfindung werden an Hand der folgenden Beschreibung bevorzugter Ausführungsformen in Verbindung mit den dazugehörigen Figuren beschrieben. Es zeigen:
- Fig.: 1 eine schematische Darstellung einer Prüfvorrichtung gemäß einem ersten Ausführungsbeispiel;
- Fig. 2: schematische Darstellung der Ermittlung eines Reifendefekts auf der Lauffläche eines Reifens;
- Fig. 3: schematische Darstellung der Ermittlung eines Reifendefekts an der Reifenflanke;

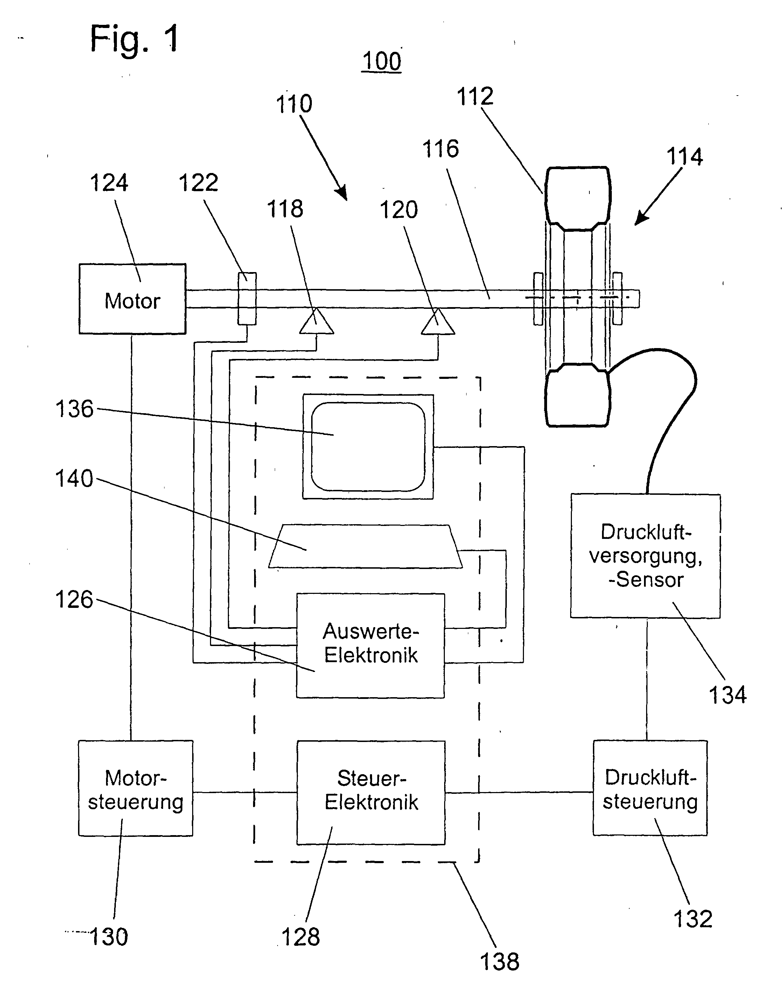

Gemäß dem in Fig. 1 gezeigten ersten Ausführungsbeispiel weist eine Prüfvorrichtung 100 eine Wuchtmaschine 110 auf, auf die ein einen Reifen 112 aufweisendes Rad 114 aufgespannt ist. Entlang einer Antriebswelle 116 der Wuchtmaschine 100 befinden sich zwei Kraftsensoren 118 und 120. Ferner ist bei dieser Ausführungsform ein Winkelmesser 122 vorgesehen. Die Antriebswelle 116 wird von einem Motor 124 - typischerweise einem Elektromotor - in Drehung versetzt. Die Drehung der Antriebswelle 116 mit dem Reifen 112 bzw. dem Rad 114 verursacht bedingt durch eine statische und/oder eine dynamische Unwucht des Reifens 112 bzw. Rades 114 eine Vibrations- oder Taumelneigung des Rades, deren Kraftwirkung aufgrund der (starren) Verbindung zwischen Rad und Antriebswelle 116 in die Antriebswelle eingeleitet und von den Kraftsensoren 118 und 120 registriert wird. Die zugehörigen von den Kraftsensoren 118, 120 erzeugten Signale werden einer Auswertelektronik 126 zugeführt. Ferner erhält die Auswerteelektronik ein Informationssignal über die jeweilige Winkelstellung des Rades, die mittels des Winkelmessers 122 und der Antriebswelle 116 abgegriffen wird. Hieraus wird der Drehwinkelbezug der Kraftmessung hergeleitet und die Lage der Unwuchtvektoren bestimmt.

Die Messung der durch die Unwucht des Rades an einer Antriebswelle der Wuchtmaschine wirkenden Kräfte kann aber auch auf andere Weise erfolgen. Es können beispielsweise jeweils zwei linear unabhängige Kraftkomponenten mittels jeweils zwei verschiedener Messwertaufnehmer, die z.B. um 90° versetzt an der Welle angeordnet sind, erfasst werden, woraus sich bei Kenntnis der verwendeten Drehzahl sowohl die Stärke als auch der Drehwinkelbezug bzw. die Richtung der Unwuchtvektoren ermitteln lässt.

Ist eine Messung der durch die Unwucht verursachten Kräfte auf die ein oder andere Weise abgeschlossen, kann mittels einer Steuerelektronik 128 ein Steuersignal an einer Motorsteuerung 130 ausgegeben werden, die die Motorsteuerung 130 veranlasst, eine andere Drehzahl D₂ an dem Motor 124 einzustellen. Parallel kann von der Steuerelektronik 128 ein Steuersignal an einer Druckluftsteuerung 132 ausgegeben werden, die eine Druckluftversorgung 134 dazu veranlasst, den Gasdruck in dem Reifen 112 zu variieren. Meldet die Motorsteuerung und die Druckluftsteuerung zurück, dass die vorausgewählte Motordrehzahl D₂ bzw. der vorausgewählte Reifendruck P₂ eingestellt sind, wird ein neuer Messvorgang gestartet. Wie bei der ersten Messung nehmen die Sensoren 118, 120 und der Winkelmesser 122 die auf die Antriebswelle 116 übertragenen Kraftkomponenten auf und leiten die Messwerte an die Auswertelektronik 126 weiter.

An den zweiten Messvorgang können sich je nach Programmierung der Auswerte- und Steuerelektronik weitere Messvorgänge anschließen.

Die Auswertelektronik 126 ist so eingerichtet, dass sie einerseits aus den gemessenen Kraftkomponenten und der zugehörigen Winkelmessung die Unwucht des Rades 114 ermitteln kann und diese Unwucht beispielsweise in Form von Vektoren U₁, U₂, usw. an eine Anzeige 136 und/oder zur Speicherung ausgibt. Die Auswertelektronik 126 ist ferner so eingerichtet, dass sie die aus den beiden (oder auch mehreren) Messungen ermittelten Vektoren U₁, U₂, usw. voneinander subtrahiert und das Resultat zur Anzeige oder zur Speicherung ausgibt.

Die Auswertelektronik 126 und die Steuerelektronik 128 können Bestandteile eines digitalen Computersystems 138 sein, wobei die eingehenden Messsignale sowie die ausgehenden Steuersignale beispielsweise über eine serielle oder parallele Schnittstelle ein- bzw. ausgegeben werden. Die Auswahl der Drehzahl und des Reifendrucks, sowie die Anzahl der insgesamt durchzuführenden Messungen kann beispielsweise individuell vorausgewählt und über eine Tastatur 140 eingegeben werden oder gemäß der in einem automatischen Programmablauf voreingestellten Parameter ausgewählt werden.

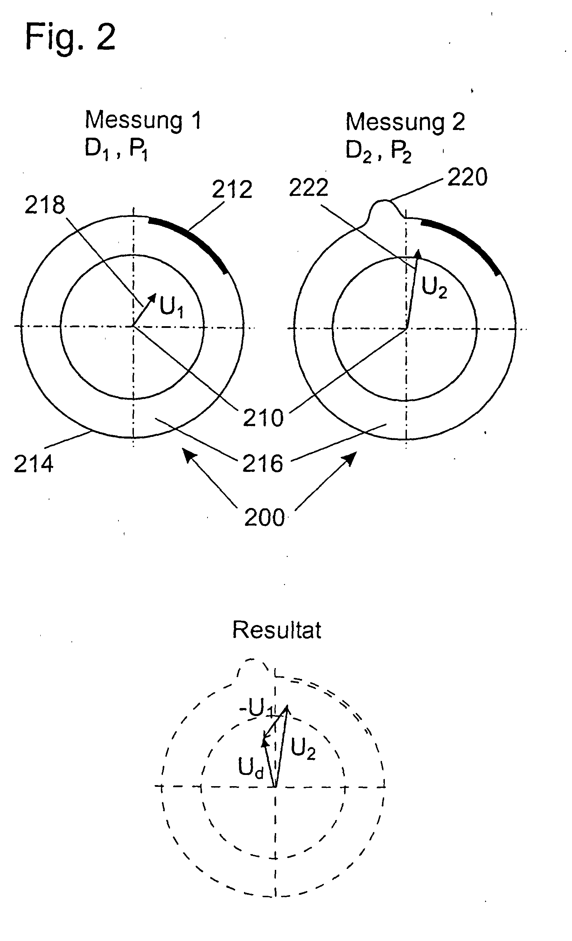

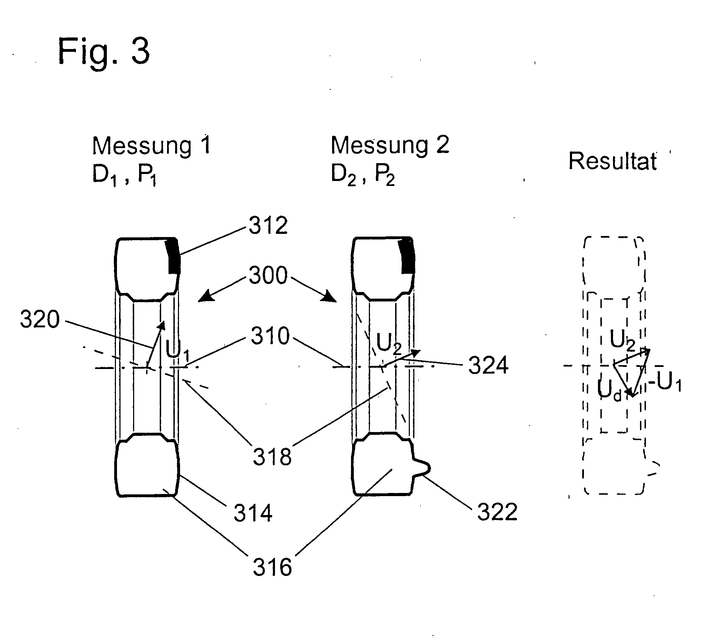

In den Fig. 2 und 3 sind zwei Beispiele gezeigt, wie aus den ermittelten Werten der Unwucht eines der zu prüfenden Reifen aufnehmenden Rades durch Subtraktion der Vektoren U₁ und U₂ eine durch den Defekt des Reifens bedingte Verlagerung der Hauptträgheitsachse des Reifens ermittelt wird. Fig. 2 stellt schematisch die Messergebnisse der Unwucht sowie das Resultat in einer Schnittebene durch ein Rad 200 senkrecht zu einer Rotationsachse 210 dar, die in dem gezeigten Beispiel mit der Zentralachse zusammenfällt. Gemäß Fig. 2 liegt eine Massenerhöhung 212 beispielsweise bedingt durch eine Materialhäufung (dicke Stelle) an der Mantelfläche 214 des zu prüfenden Reifens 216 vor. Diese führt bei einer Messung 1 in der der Reifen mit einem Druck P₁ beaufschlagt ist und die bei einer Drehzahl D₁ durchgeführt wird, zu einer Unwucht U₁, d. h. zu einer Verschiebung der Hauptträgheitsachse des Rades 200 gegenüber der Rotationsachse 210 um die Länge des Vektors 218 (übertrieben dargestellt). In einer zweiten Messung bei einem erhöhten Druck P₂ (> P₁) einer erhöhten Drehzahl D₂ (> D₁) und bildet sich bedingt durch einen Defekt (z.B. strukturschwache Stelle) in der Lauffläche 214 des Reifens eine Verformung 220, die zu einer Veränderung der Massenverteilung führt. Aus der in Messung 2 ermittelten Unwucht U₂ lässt sich die Lage der Hauptträgheitsachse des Rades bzgl. dessen Zentralachse bzw. hier auch bezüglich der Rotationsachse 210 ermitteln, dargestellt durch einen Vektor 222. Die Differenz aus beiden ermittelten Unwuchtsektoren U₂ - U₁ ergibt einen Vektor U_{d}, der die durch den Defekt bedingte Verlagerung der Hauptträgheitsachse des Reifens anzeigt, die durch die Erhöhung des Drucks und der Drehzahl herbeigeführt wurde. Vorzugsweise wird der Vektor U₁ von dem Vektor U₂ subtrahiert, wenn der Druck und die Drehzahl bei der zweiten Messung gegenüber der zweiten Messung erhöht wurden, dann nämlich weist der Differenzvektor U_{d} in Richtung des Defektes.

In einer weiteren beispielhaften Messung nach dem erfindungsgemäßen Verfahren wird die Ermittlung eines Defektes an der Reifenflanke bei Vorliegen einer dynamischen Unwucht des Rades 300 aufgezeigt, siehe Fig. 3. Das Rad 300 ist in einem schematischen Querschnitt parallel zu der Rotationsachse 310 dargestellt, die in diesem Beispiel ebenfalls mit dessen Zentralachse zusammenfällt. Einer Massenerhöhung 312 an einer Seitenfläche 314 des Reifens 316 bewirkt eine Verkippung der Hauptträgheitsachse 318 gegenüber der Rotationsachse 310. Daraus resultiert eine Unwucht U₁, die durch einen Vektor 320 wiedergegeben wird. Während die erste Messung bei einem Reifendruck P₁ und einer Drehzahl D₁ durchgeführt wurde, findet eine zweite Messung bei einem erhöhten Reifendruck P₂ (> P₁) und einer erhöhten Drehzahl D₂ (> D₁) statt. Durch die somit erhöhten an dem Reifen 316 angreifenden Kräfte bildet sich eine Verformung 322. Diese führt wiederum zu einer Veränderung der Massenverteilung des Reifens und somit zu einer Verlagerung bzw. Verkippung der Hauptträgheitsachse des Reifens. Die veränderte Lage der Hauptträgheitsachse wird durch die ermittelte Umwucht U₂ repräsentiert, vgl. Vektor 324. Ein sich aus der Differenzbildung U₂ - U₁ ergebender Vektor U_{d} gibt die durch den Defekt bedingte Verlagerung - in diesem Fall Verkippung - der Hauptträgheitsachse wieder.

Selbstverständlich kann auf diese Weise jede andere beliebige Verkippung oder Verschiebung und insbesondere eine Kombination aus Verkippung und Verschiebung der Hauptträgheitsachse des Reifens detektiert werden. Unter dem Oberbegriff Verlagerung ist in diesem Sinne daher jede Kombination aus Verkippung und Verschiebung zu verstehen.

### [Bezugszeichenliste]

- 100: Prüfvorrichtung
- 110: Wuchtmaschine
- 112: Reifen
- 114: Rad
- 116: Antriebswelle
- 118: Kraftsensor
- 120: Kraftsensor
- 122: Winkelmesser
- 124: Motor
- 126: Auswerteelektronik
- 128: Steuerelektronik
- 130: Motorsteuerung
- 132: Druckluftsteuerung
- 134: Druckluftversorgung
- 136: Anzeige
- 138: Computersystem
- 140: Tastatur

- 200: Rad
- 210: Zentral- und Rotationsachse
- 212: Massenerhöhung
- 214: Lauffläche
- 216: Reifen
- 218: Vektor U₁
- 220: Verformung
- 222: Vektor U₂

- 300: Rad
- 310: Zentralachse
- 312: Massenerhöhung
- 314: Seitenfläche
- 316: Reifen
- 318: Hauptträgheitsachse
- 320: Vektor U₁
- 322: Verformung
- 324: Vektor U₂
- 310: Zentralachse

## Patentansprüche

1. Verfahren zum Prüfen der Gleichförmigkeit eines Luftreifens eines Fahrzeugrades,
**dadurch gekennzeichnet, dass** die Differenz zweier bei unterschiedlicher Raddrehzahl und bei unterschiedlichem Reifendruck ermittelter Unwuchtvektoren des Fahrzeugrades für die Bewertung der Reifengleichförmigkeit gebildet wird.

2. Verfahren nach Anspruch 1,
**gekennzeichnet durch** die folgenden Schritte:
- erstes Messen der **durch** die Radunwucht wirkenden Kräfte, wobei der Reifen mit einem ersten Innendruck beaufschlagt wird,
- Ermitteln der Unwucht aus den gemessenen Kräften,
- Speichern der ermittelten Unwucht in Form eines ersten Unwuchtvektors,
- zweites Messen der **durch** die Radunwucht wirkenden Kräfte, wobei der Reifen mit einem vom ersten Innendruck abweichenden zweiten Innendruck beaufschlagt wird,
- Ermitteln der Unwucht aus den erneut gemessenen Kräften,
- Speichern der erneut ermittelten Unwucht in Form eines Unwuchtvektors und
- Bilden einer Differenz aus den beiden Unwuchtvektoren.

3. Verfahren nach Anspruch 1 ,
**gekennzeichnet durch** die folgenden Schritte:
- erstes Messen der **durch** die Unwucht des Rades wirkenden Kräfte bei einer ersten Drehzahl,
- Ermitteln der Unwucht aus den gemessenen Kräften,
- Speichern der ermittelten Unwucht in Form eines ersten Unwuchtvektors,
- zweites Messen der **durch** die Unwucht des Rades wirkenden Kräfte bei einer von der ersten Drehzahl abweichenden zweiten Drehzahl,
- Ermitteln der Unwucht aus den erneut gemessenen Kräften,
- Speichern der erneut ermittelten Unwucht in Form eines zweiten Unwuchtvektors und
- Bilden einer Differenz aus den beiden Unwuchtvektoren.

4. Verfahren nach einem der Ansprüche 1 bis 3,
**dadurch gekennzeichnet, dass** jeweils eine dynamische Unwuchtmessung durchgeführt wird.

5. Verfahren nach einem der Ansprüche 1 bis 4,
**dadurch gekennzeichnet, dass** der Luftreifen beim ersten Messlauf mit einem höheren Druck als der Nenndruck und beim zweiten Messlauf mit dem Nenndruck gefüllt wird.

6. Verfahren nach einem der Ansprüche 1 bis 5,
**dadurch gekennzeichnet, dass** die Differenz der beiden Unwuchtvektoren mit einer in Abhängigkeit von den Radabmessungen zulässigen Toleranz verglichen wird.

7. Vorrichtung zum Prüfen der Gleichförmigkeit eines Luftreifens eines Fahrzeugrades gemäß einem Verfahren nach einem der Ansprüche 1 bis 6,
**dadurch gekennzeichnet, dass** die Vorrichtung eine Radauswuchtmaschine aufweist
- mit einem Rotationsantrieb für ein den zu prüfenden Luftreifen aufnehmendes Rad,
- mit einer Antriebssteuerung und
- mit wenigstens einem Messwertaufnehmer zum Messen der durch eine Unwucht des Rades während der Rotation wirkenden Kräfte
und eine Auswerteeinrichtung aufweist
- mit einer Einrichtung zum Ermitteln von Unwuchtvektoren aus den gemessenen Kräften und
- mit einer zweiten Einrichtung zum Ermitteln der Differenz aus den beiden Unwuchtvektoren.

8. Prüfvorrichtung nach Anspruch 7,
die ferner eine Druckgasversorgung aufweist zum Füllen des Reifens mit einem vorausgewählten Druck.

9. Prüfvorrichtung nach Anspruch 7 oder 8,
**dadurch gekennzeichnet, dass** der Rotationsantrieb und die Antriebssteuerung so ausgestaltet sind, dass die Drehzahl variiert werden kann.

10. Prüfvorrichtung nach einem der Ansprüche 7 bis 9,
**dadurch gekennzeichnet, dass** die Radauswuchtmaschine ferner einen Messwertaufnehmer zum Messen der Winkelstellung des Rades aufweist und dass die erste Einrichtung der Auswerteeinrichtung eingerichtet ist zum Ermitteln der Unwuchtvektoren aus den gemessenen Kräften und der gemessenen Winkelstellung.

11. Prüfvorrichtung nach einem der Ansprüche 7 bis 10,
**dadurch gekennzeichnet, dass** die Auswerteeinrichtung ferner eine Anzeige aufweist.

12. Prüfvorrichtung nach Anspruch 11,
**dadurch gekennzeichnet, dass** die Auswerteeinrichtung Bestandteil eines digitalen Computersystems ist.

13. Verwendung einer Wuchtmaschine zur Durchführung eines Verfahrens nach einem der Ansprüche 1 bis 6.

14. Computerprogramm eingerichtet zur computergestützten Durchführung eines Verfahrens nach einem der Ansprüche 1 bis 6 das Mittel zum
- Einlesen erster Messwerte der durch eine Unwucht eines Rades während der Rotation auf Messwertaufnehmer einer Radauswuchtmaschine wirkenden Kräfte,
- Ermitteln der Unwucht aus den eingelesenen Messwerten,
- Speichern der ermittelten Unwucht in Form eines ersten Unwuchtvektors,
- Einlesen zweiter Messwerte der durch eine Unwucht des Rades während der Rotation auf die Messwertaufnehmer der Radauswuchtmaschine wirkenden Kräfte,
- Ermitteln der Unwucht aus den erneut eingelesenen Messwerten,
- Speichern der erneut ermittelten Unwucht in Form eines zweiten Unwuchtvektors und
- Bilden einer Differenz aus den beiden Unwuchtvektoren aufweist.

15. Computerprogramm nach Anspruch 14,
des Mittel zur Ausgabe eines Steuersignals zum Einstellen eines Reifendruckes an einer Druckluftversorgung aufweist.

16. Computerprogramm nach Anspruch 14 oder 15,
das Mittel zur Ausgabe eines Steuersignals zum Einstellen einer Drehzahl an einem Rotationsantrieb der Radauswuchtmaschine aufweist.

17. Computerprogramm nach einem der Ansprüche 14 bis 16,
das Mittel zum Einlesen erster und zweiter Messwerte einer Winkelposition aufweist.

18. Computerprogramm nach einem der Ansprüche 14 bis 17,
das Mittel zur Ausgabe eines Signals zum Anzeigen der Position des Defektes bezüglich des Rades aufweist.

19. Digitales Speichermedium mit dem Computerprogramm nach einem der Ansprüche 14 bis 18 entsprechenden, elektronisch auslesbaren Steuersignalen, die so mit einem digitalen Computersystem zusammenwirken können, dass ein Computerprogramm nach einem der Ansprüche 14 bis 18 ausgeführt wird.

## Claims

1. A method of checking the uniformity of a pneumatic tyre of a vehicle wheel, **characterised in that** the difference between two unbalance vectors of the vehicle wheel, which are ascertained with a differing wheel speed and a differing tyre pressure, are formed for evaluation of the uniformity of the tyre.

2. A method according to claim 1 **characterised by** the following steps
- first measurement of the forces acting due to wheel unbalance, with the tyre being at a first internal pressure,
- ascertaining the unbalance from the measured forces,
- storing the ascertained unbalance in the form of a first unbalance vector,
- second measurement of the forces acting due to wheel unbalance, with the tyre being at a second internal pressure differing from the first internal pressure,
- ascertaining the unbalance from the freshly measured forces,
- storing the freshly ascertained unbalance in the form of a second unbalance vector, and
- forming a difference from the two unbalance vectors.

3. A method according to claim 1 **characterised by** the following steps
- first measurement of the forces acting due to unbalance of the wheel at a first rotary speed,
- ascertaining the unbalance from the measured forces,
- storing the ascertained unbalance in the form of a first unbalance vector,
- second measurement of the forces acting due to unbalance of the wheel at a second rotary speed differing from the first rotary speed,
- ascertaining the unbalance from the freshly measured forces,
- storing the freshly ascertained unbalance in the form of a second unbalance vector, and
- forming a difference from the two unbalance vectors.

4. A method according to one of claims 1 to 3
**characterised in that** a respective dynamic unbalance measuring operation is performed.

5. A method according to one of claims 1 to 4
**characterised in that** the tyre is inflated at a higher pressure than the nominal pressure in the first measuring run and is inflated at the nominal pressure in the second measuring run.

6. A method according to one of claims 1 to 5
**characterised in that** the difference between the two unbalance vectors is compared with a tolerance which is admissible in dependence on the wheel dimensions.

7. Apparatus for checking the uniformity of a pneumatic tyre of a vehicle wheel, in accordance with the method according to one of claims 1 to 6,
**characterised in that** the apparatus has a wheel balancing machine with
- a rotary drive for a wheel receiving the tyre to be checked,
- a drive control, and
- at least one measurement value pickup for measuring the forces acting due to an unbalance of the wheel during the rotation thereof,
and has an evaluation arrangement with
- a device for ascertaining balance vectors from the measured forces, and
- a second device for ascertaining the difference of the two unbalance vectors.

8. A checking apparatus according to claim 7
which further has a pressure gas supply for inflating the tyre at a preselected pressure.

9. A checking apparatus according to claim 7 or claim 8
**characterised in that** the rotary drive and the drive control are so adapted that the rotary speed can be varied.

10. A checking apparatus according to one of claims 7 to 9
**characterised in that** the wheel balancing machine further includes a measurement value pickup for measuring the angular position of the wheel and that the first device of the evaluation arrangement is adapted to ascertain unbalance vectors from the measured forces and the measured angular position.

11. A checking apparatus according to one of claims 7 to 10
**characterised in that** the evaluation arrangement further includes a display.

12. A checking apparatus according to claim 11
**characterised in that** the evaluation arrangement is a component part of a digital computer system.

13. Use of a balancing machine for carrying out a method according to one of claims 1 to 6.

14. A computer program adapted for computer-aided execution of a method according to one of claims 1 to 6 which has means for
- reading in first measurement values of the forces acting due to unbalance of a wheel during rotation on measurement value pickups of a wheel balancing machine,
- ascertaining the unbalance from the read-in measurement values,
- storing the ascertained unbalance in the form of a first unbalance vector,
- reading in second measurement values of the forces acting due to unbalance of the wheel during rotation on the measurement value pickups of the wheel balancing machine,
- ascertaining the unbalance from the measurement values which are freshly read in,
- storing the freshly ascertained unbalance in the form of a second unbalance vector, and
- forming a difference from the two unbalance vectors.

15. A computer program according to claim 14 which has means for outputting a control signal for setting a tyre pressure at a compressed air supply.

16. A computer program according to claim 14 or claim 15 which has means for outputting a control signal for setting a rotary speed at a rotary drive of the wheel balancing machine.

17. A computer program according to one of claims 14 to 16 which has means for reading in first and second measurement values in respect of an angular position.

18. A computer program according to one of claims 14 to 17 which has means for outputting a signal for displaying the position of the defect with respect to the wheel.

19. A digital storage medium with control signals which can be electronically read out and which correspond to the computer program according to one of claims 14 to 18 and which can co-operate with a digital computer system so that a computer program according to one of claims 14 to 18 is executed.

## Revendications

1. Procédé de contrôle de l'uniformité d'un pneumatique d'une roue de véhicule automobile,
**caractérisé en ce que** l'on forme la différence de deux vecteurs de balourd de la roue du véhicule, déterminés pour des vitesses de rotation de la roue qui sont différentes et pour des pressions du pneumatique qui sont différentes, pour évaluer l'uniformité du pneumatique.

2. Procédé suivant la revendication 1,
**caractérisé par** les stades suivants :
- première mesure des forces appliquées par le balourd de la roue, le pneumatique étant gonflé à une première pression,
- détermination du balourd à partir des forces mesurées,
- mémorisation du balourd déterminé sous la forme d'un premier vecteur de balourd,
- deuxième mesure des forces appliquées par le balourd de la roue, le pneumatique étant gonflé à une deuxième pression différente de la première pression,
- détermination du balourd à partir des forces nouvellement mesurées,
- mémorisation du balourd nouvellement déterminé sous la forme d'un vecteur de balourd et
- formation d'une différence à partir des deux vecteurs de balourd.

3. Procédé suivant la revendication 1,
**caractérisé par** les stades suivants :
- première mesure des forces appliquées par le balourd de la roue pour une première vitesse de rotation,
- détermination du balourd à partir des forces mesurées,
- mémorisation du balourd déterminé sous la forme d'un premier vecteur de balourd,
- deuxième mesure des forces appliquées par le balourd de la roue pour une deuxième vitesse de rotation différente de la première vitesse de rotation,
- détermination du balourd à partir des forces nouvellement mesurées,
- mémorisation du balourd nouvellement déterminé sous la forme d'un deuxième vecteur de balourd et
- formation d'une différence à partir des deux vecteurs de balourd.

4. Procédé suivant l'une des revendications 1 à 3, **caractérisé en ce que** l'on effectue respectivement une mesure de balourd dynamique.

5. Procédé suivant l'une des revendications 1 à 4, **caractérisé en ce que** l'on gonfle le pneumatique lors de la première mesure à une pression plus grande que la pression nominale et dans la deuxième mesure à la pression nominale.

6. Procédé suivant l'une des revendications 1 à 5, **caractérisé en ce que** l'on compare la différence des deux vecteurs de balourd à une tolérance admissible qui dépend des dimensions de la roue.

7. Dispositif de contrôle de l'uniformité d'un pneumatique d'une roue d'un véhicule automobile suivant un procédé selon l'une des revendications 1 à 6,
**caractérisé en ce que** le dispositif comporte une machine d'équilibrage de roues
- comprenant un entraînement en rotation d'une roue recevant le pneumatique à contrôler,
- comprenant une commande d'entraînement et
- comprenant au moins un capteur de valeur de mesure pour mesurer les forces appliquées par un balourd de la roue pendant la rotation
et un dispositif d'exploitation
- comprenant un dispositif de détermination de vecteurs de balourd à partir des forces mesurées et
- comprenant un deuxième dispositif de détermination de la différence à partir des deux vecteurs de balourd.

8. Procédé suivant la revendication 7 qui a une alimentation en gaz comprimé pour gonfler le pneumatique à une pression sélectionnée à l'avance.

9. Procédé suivant la revendication 7 ou 8, **caractérisé en ce que** l'entraînement en rotation et la commande d'entraînement sont tels que l'on peut faire varier la vitesse de rotation.

10. Procédé suivant l'une des revendications 7 à 9, **caractérisé en ce que** la machine d'équilibrage de la roue comprend en outre un capteur de valeur de mesure pour mesurer la position angulaire de la roue et **en ce que** le premier dispositif du dispositif d'exploitation est conçu pour déterminer les vecteurs de balourd à partir des forces mesurées et de la position angulaire mesurée.

11. Procédé suivant l'une des revendications 7 à 10, **caractérisé en ce que** le dispositif d'exploitation comporte en outre un affichage.

12. Procédé suivant la revendication 11, **caractérisé en ce que** le dispositif d'exploitation fait partie d'un système informatique numérique.

13. Utilisation d'une machine d'équilibrage pour effectuer un procédé suivant l'une des revendications 1 à 6.

14. Programme informatique pour la mise en oeuvre assistée par ordinateur d'un procédé suivant l'une des revendications 1 à 6 qui comporte des moyens de
- lecture de premières valeurs de mesure des forces appliquées sur un capteur de valeur de mesure d'une machine d'équilibrage de roues par un balourd d'une roue pendant la rotation,
- détermination du balourd à partir d'une valeur de mesure lue,
- mémorisation du balourd déterminé sous la forme d'un premier vecteur de balourd,
- lecture de deuxièmes valeurs de mesure des forces appliquées sur un capteur de valeur de mesure d'une machine d'équilibrage de roues par un balourd d'une roue pendant la rotation,
- détermination du balourd à partir des valeurs de mesure nouvellement lues,
- mémorisation du balourd nouvellement déterminé sous la forme d'un deuxième vecteur de balourd et
- formation d'une différence à partir des deux vecteurs de balourd.

15. Programme informatique suivant la revendication 14 qui comporte des moyens d'émission d'un signal de commande pour établir une pression du pneumatique sur une alimentation en air comprimé.

16. Programme informatique suivant la revendication 14 ou 15 qui comprend des moyens d'émission d'un signal de commande pour établir une vitesse de rotation sur un entraînement en rotation de la machine d'équilibrage de roue.

17. Programme informatique suivant l'une des revendications 14 à 16 qui comprend des moyens de lecture de premières et de deuxièmes valeurs de mesure d'une position angulaire.

18. Programme informatique suivant l'une des revendications 14 à 17 qui comprend des moyens d'émission d'un signal d'indication de la position du défaut par rapport à la roue.

19. Support de mémoire numérique comprenant des signaux de commande pouvant être lus électroniquement par le programme informatique, suivant l'une des revendications 14 à 18 et qui peuvent ainsi coopérer avec un système informatique numérique, de façon à pouvoir exécuter un programme informatique suivant l'une des revendications 14 à 18.
